# EUROPEAN PATENT APPLICATION

(11) **EP 4 822 828 A1**
(43) Date of publication of application: **14.10.2026**
(21) Application number: 25880030.9
(22) Date of filing: 15.09.2025
(51) Int. Cl.: H01M 10/6552, H01M 10/613, H01M 10/6568, H01M 10/625

(54) **CELL ASSEMBLY, AND BATTERY PACK AND VEHICLE INCLUDING SAME**

(30) Priority: 14.10.2024 KR 20240139633
(71) Applicant: LG Energy Solution, Ltd., Seoul 07335 (KR)
(72) Inventor: LEE, So-Jeong, Daejeon 34122 (KR); KIM, Chang-Hyun, Daejeon 34122 (KR); NA, Jong-Seung, Daejeon 34122 (KR); PARK, Jin-Soo, Daejeon 34122 (KR); CHA, Hun, Daejeon 34122 (KR)
(74) Representative: BCKIP Part mbB
(86) International application number: PCT/KR2025/014334
(87) International publication number: WO 2026/084269

(57) **Abstract**

The present disclosure relates to a cell assembly that includes: a plurality of battery cells; and a cooling member configured to surround at least some of the plurality of battery cells and allow a cooling medium to flow therein.

## Description

### TECHNICAL FIELD

The present disclosure relates to a cell assembly, and a battery pack and vehicle including the same.

This application is based on and claims priority from Korean Patent Application No. 10-2024-0139633, filed on October 14, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or battery pack may be variously configured depending on the required output voltage or charge/discharge capacity.

A common method for configuring a battery pack by connecting multiple battery cells in series/parallel is performed by preferentially configuring a battery module including at least one battery cell and then by adding other components to at least one battery module to configure a battery pack or battery rack. Recently, cell-to-pack-type battery packs in which multiple battery cells are directly stored in a pack housing instead of being modularized, have been manufactured.

Meanwhile, battery packs typically include cooling plates, such as thermal resin, to cool the multiple battery cells. For example, the cooling plate is provided at the lower surface of multiple battery cells.

In this case, when charging a battery, significant temperature differences may occur among the battery cells in contact with the cooling plate. This may lead to degraded battery cell performance or shortened battery life. In addition, the time taken for rapid charging of the battery may increase.

Therefore, there is a need to develop a structure capable of minimizing temperature differences among multiple battery cells, thereby improving the battery cell efficiency and extending the lifespan of the battery.

### DISCLOSURE

### Technical Problem

The present disclosure is designed to solve the problems of the related art, and therefore the present disclosure is directed to providing a cell assembly capable of maximizing the performance and lifespan of battery cells by minimizing the temperature difference among the battery cells, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a cell assembly that includes: a plurality of battery cells; and a cooling member configured to surround at least some of the plurality of battery cells and allow a cooling medium to flow therein.

The cooling member may be configured in the form of a tube.

The cooling member may be configured to maintain a uniform temperature among the plurality of battery cells.

The cooling member may include a first accommodation portion configured to surround a battery cell, and a second accommodation portion configured to surround another battery cell.

The first accommodation portion and the second accommodation portion may be connected to each other such that the cooling medium flows therethrough.

At least one of the first accommodation portion and the second accommodation portion may be provided in a plurality of units for each of the battery cells.

In another aspect of the present disclosure, there is provided a battery pack including at least one cell assembly according to the present disclosure.

The battery pack according to the present disclosure may include a pack case configured to accommodate the cell assembly, and the cooling member may be configured to be connected to a side surface of the pack case.

The battery pack according to another embodiment of the present disclosure may further include a heat sink configured to be connected to the cooling member.

The heat sink may have an outlet configured to supply the cooling medium to the cooling member, and an inlet configured to receive the cooling medium from the cooling member.

The cell assembly and the cooling member may be provided in a plurality of units, and the cooling member is provided for each cell assembly.

The plurality of cooling members may be configured to communicate with each other.

In another aspect of the present disclosure, there is provided a vehicle including a battery pack according to the present disclosure.

### Advantageous Effects

According to one aspect of the present disclosure, the cooling performance of a battery cell can be improved by providing a cooling member configured to surround the battery cell.

In addition, according to another aspect of the present disclosure, the lifespan of a battery cell can be extended by minimizing the temperature difference among a plurality of battery cells. In particular, this aspect of the present disclosure may maximize the performance of the battery cell.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a cell assembly according to an embodiment of the present disclosure.
FIG. 2 is an exploded perspective view of a cell assembly according to an embodiment of the present disclosure.
FIG. 3 is a cross-sectional view of a cell assembly according to an embodiment of the present disclosure.
FIG. 4 is a side view of a cell assembly according to an embodiment of the present disclosure.
FIG. 5 is a schematic perspective view of a battery pack including a cell assembly according to an embodiment of the present disclosure.
FIG. 6 is a schematic perspective view of a battery pack including a cell assembly according to another embodiment of the present disclosure.
FIG. 7 is a cross-sectional view of a portion of a battery pack according to another embodiment of the present disclosure.
FIG. 8 is a drawing illustrating the flow of a cooling medium in a battery pack according to another embodiment of the present disclosure.
FIG. 9 is a top view of the interior of a battery pack according to another embodiment of the present disclosure.
FIG. 10 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

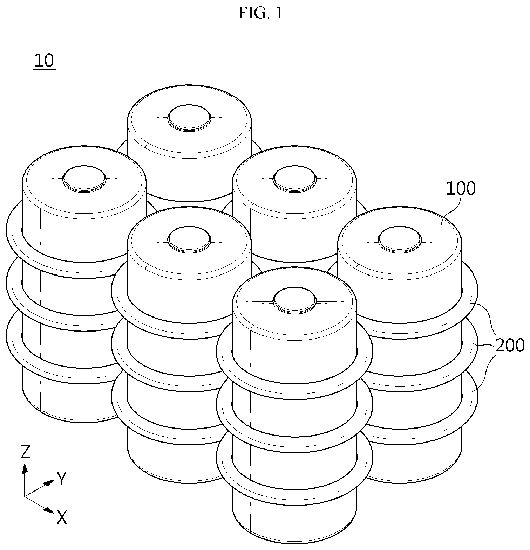

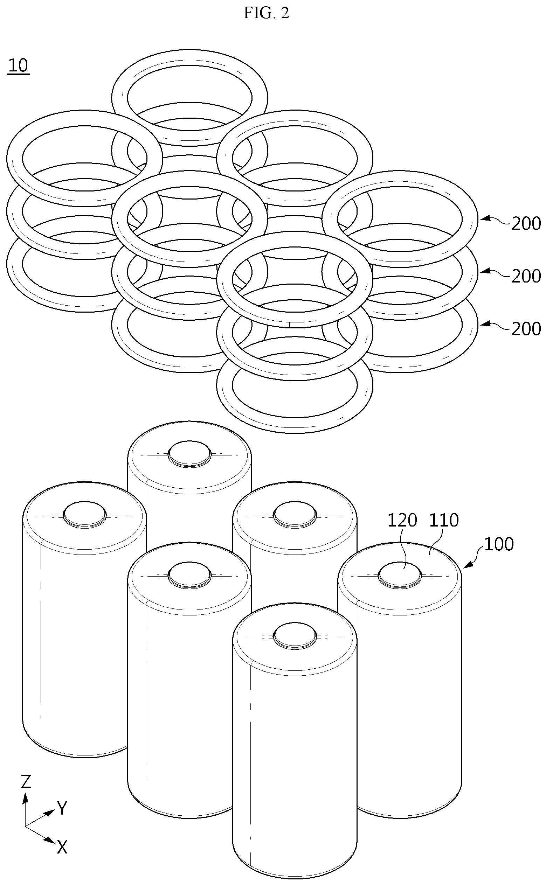

FIG. 1 is an overall perspective view of a cell assembly according to an embodiment of the present disclosure, and FIG. 2 is an exploded perspective view of a cell assembly according to an embodiment of the present disclosure.

Referring to FIGS. 1 and 2, a cell assembly 10 according to an embodiment of the present disclosure includes a battery cell 100 and a cooling member 200.

The battery cell 100 according to an embodiment of the present disclosure may be a secondary battery configured to be chargeable and dischargeable. For example, the battery cell 100 may be a lithium-ion secondary battery. The battery cell 100 may include an electrode assembly (including a positive electrode plate, a negative electrode plate, and a separator), an electrolyte, and a cell case 110 that accommodates them.

Referring to the embodiment illustrated in FIG. 2, the battery cell 100 according to an embodiment of the present disclosure may be a cylindrical secondary battery having a cell case 110 configured in a cylindrical shape. In this case, the battery cell 100 may include a terminal 120 on its top. The terminal 120 may be configured to be exposed to the outside of the cell case 110.

In this case, the cell case 110 may have a first polarity and function as a first terminal, and the terminal 120 may have a second polarity and function as a second terminal. For example, the first terminal may be a negative electrode terminal, and the second terminal may be a positive electrode terminal.

Meanwhile, the present disclosure is not limited to a specific type or shape of the battery cell 100, and various battery cells 100 known at the time of filing of the present disclosure may be employed to configure the cell assembly 10 of the present disclosure. For example, the cell case 110 may be configured as a pouch-type or prismatic-type case.

Meanwhile, a plurality of battery cells 100 may be included. The plurality of battery cells 100 may be electrically connected to each other. For example, the plurality of battery cells 100 may be electrically connected in series and/or parallel to each other via busbars or the like.

The plurality of battery cells 100 may be included in a cell assembly 10 while being stacked on each other. For example, as illustrated in FIG. 1, the plurality of battery cells 100 may be arranged side by side in the horizontal direction while standing in the vertical direction (the Z-axis direction).

The cooling member 200 may be configured such that its inner space is filled with a cooling medium C. The cooling medium C may be formed of insulating oil or cooling water.

The cooling member 200 may be configured to at least partially surround the outer surface of the battery cell 100. The cooling member 200 may be configured to be in surface-contact with the battery cell 100.

The cooling member 200 may be configured to surround at least some of the plurality of battery cells 100. The cooling member 200 may be configured to group at least some of the plurality of battery cells. As disclosed in the embodiment shown in FIG. 1, the cooling members 200 may be configured to surround all of the plurality of battery cells 100. In particular, the cooling member 200 may be configured to individually surround the outer surfaces of the plurality of battery cells 100. That is, the cooling member 200 may be configured to accommodate each of the plurality of battery cells 100.

According to the above-implemented configuration of the present disclosure, the cooling medium C filled in the cooling member 200 may delay the temperature rise of the battery cell 100, even in situations such as rapid charging and discharging of the battery cell 100, thereby preventing a rapid temperature rise of the battery cell 100. Therefore, the cooling performance of the battery cell 100 may be improved.

This cooling member 200 may be configured to maintain a uniform temperature among the plurality of battery cells 100. Specifically, during rapid charging, the temperatures of the battery cells 100 included in the cell assembly 10 may differ from each other. In this case, the cooling member 200 may transfer heat from a battery cell 100 with a relatively high temperature to a battery cell 100 with a relatively low temperature.

According to the above-implemented configuration of the present disclosure, a uniform temperature may be maintained among the plurality of battery cells 100 by providing the cooling member 200. Therefore, the temperature differences among the battery cells 100 may be minimized, thereby extending the lifespan of the battery cells 100. In addition, according to the above-implemented configuration of the present disclosure, the performance of the battery cells 100 may be maximized.

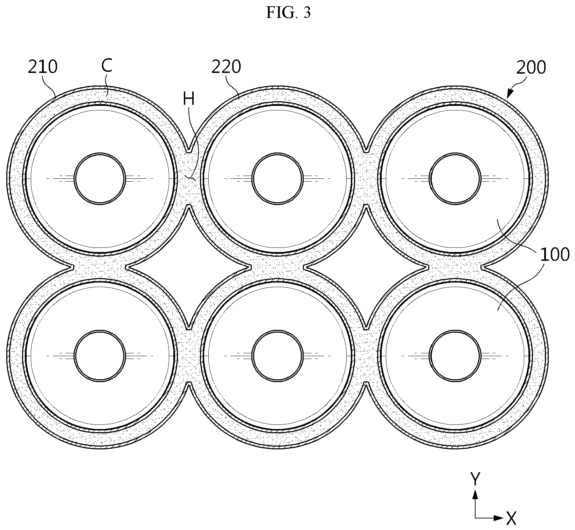

FIG. 3 is a cross-sectional view of a cell assembly according to an embodiment of the present disclosure.

Referring to FIG. 3, the cooling member 200 may be configured in the form of a tube. The cooling member 200 may be configured in the shape of a ring having a thin film. A cooling medium C may be filled inside the tube-type cooling member 200.

Since the cooling member 200 is configured in the shape of a ring, the battery cell 100 may be inserted into the cooling member 200 so that the outer surface of the battery cell 100 contacts the inner surface of the cooling member 200.

The cooling member 200 may be configured to have elasticity. The cooling member 200 may be made of a flexible material. Therefore, the cooling member 200 may be configured to surround the outer surface of the battery cell 100 so as to conform to the shape of the battery cell 100.

According to the above-implemented configuration of the present disclosure, even if an external impact is applied to the cell assembly 10, the impact on the battery cell 100 may be mitigated by the cooling member 200. In addition, since the tube-type cooling member 200 is provided between the battery cells 100, the battery cells 100 may be prevented from contacting each other.

The cooling member 200 may include a plurality of unit cooling members. The plurality of unit cooling members may each be configured to surround the battery cell 100. Each of the plurality of unit cooling members may be configured to accommodate a respective battery cell 100.

That is, the plurality of unit cooling members may be combined to form a single cooling member 200 that surrounds the entire cell assembly 10. For example, as disclosed in the embodiment illustrated in FIG. 3, six battery cells 100 may be included in the cell assembly 10, and six unit cooling members may be provided in the cooling member 200.

Meanwhile, the number and diameter of the unit cooling members are not limited thereto, and may be configured in consideration of an appropriate LPM for cooling the battery cell 100.

As a more specific example, the cooling member 200 may include a first accommodation portion 210 and a second accommodation portion 220. The first accommodation portion 210 and the second accommodation portion 220 may be provided in different unit cooling members. The first accommodation portion 210 and the second accommodation portion 220 may be formed by the inner surfaces of the unit cooling members. The first accommodation portion 210 and the second accommodation portion 220 may be configured to surround different battery cells 100, respectively.

The first accommodation portion 210 and the second accommodation portion 220 may be configured to be connected to each other. The first accommodation portion 210 and the second accommodation portion 220 may be configured such that a cooling medium C is capable of moving between them. That is, the first accommodation portion 210 and the second accommodation portion 220 may be configured to communicate with each other to allow the cooling medium C to flow between them.

The cooling member 200 may include a connecting hole H. The connecting hole H may be configured to connect the first accommodation portion 210 and the second accommodation portion 220 to each other. The connecting hole H may be formed between the first accommodation portion 210 and the second accommodation portion 220. The cooling medium C may flow between the first accommodation portion 210 and the second accommodation portion 220 through the connecting hole H.

According to the above-implemented configuration of the present disclosure, since the cooling medium C may flow through all unit cooling members, it may contact all battery cells 100 included in the cell assembly 10, thereby maintaining a uniform temperature among the battery cells 100.

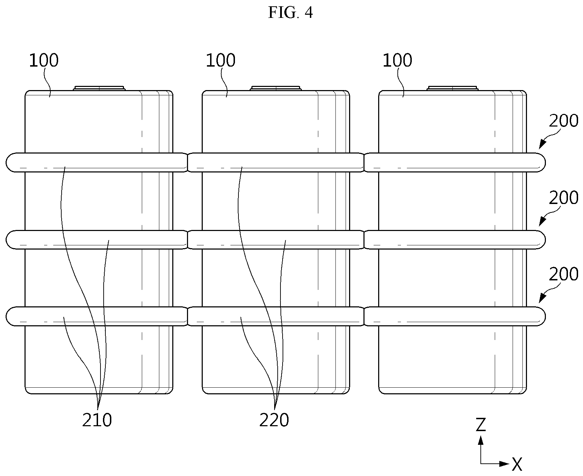

FIG. 4 is a side view of a cell assembly according to an embodiment of the present disclosure.

A plurality of cooling members 200 may be provided. For example, as disclosed in the embodiment illustrated in FIG. 4, the plurality of cooling members 200 may be arranged along the height direction of the battery cell 100.

More specifically, at least one of the first accommodation portion 210 and the second accommodation portion 220 may be provided in a plurality of units for each battery cell 100. At least one of the first accommodation portions 210 and the second accommodation portions 220 may be arranged to be spaced apart from each other along the height direction of the battery cell 100.

In this case, the cooling medium C may be configured to flow between the first accommodation portions 210 provided in the same cooling member 200 or between the second accommodation portions 220 provided in the same cooling member 200. Alternatively, the cooling medium C may be configured to flow between the first accommodation portion 210 and the second accommodation portion 220 provided in different cooling members 200.

According to the above-implemented configuration of the present disclosure, as the contact area between the cooling member 200 and the battery cell 100 increases, the cooling performance of the battery cell 100 may be further improved. In addition, not only the temperature difference between the battery cells 100 but also the temperature difference in the height direction within a single battery cell 100 may be minimized, thereby increasing the lifespan of the battery cell 100. Therefore, the performance of the battery cell 100 may be maximized.

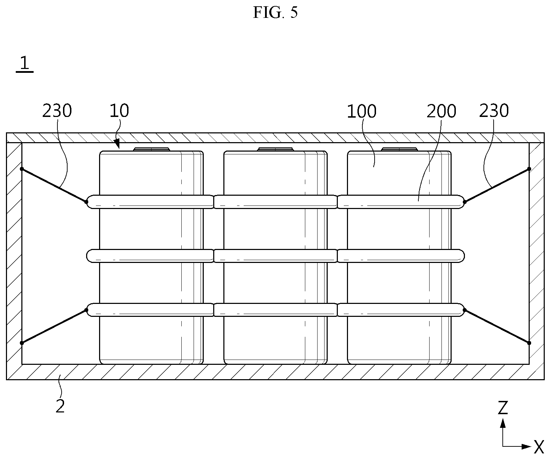

FIG. 5 is a schematic perspective view of a battery pack including a cell assembly according to an embodiment of the present disclosure.

A battery pack 1 according to an embodiment of the present disclosure may include at least one cell assembly 10 according to an embodiment of the present disclosure as described above.

The battery pack 1 according to an embodiment of the present disclosure may include a pack case 2 configured to accommodate the cell assembly 10. The battery cell 100 may be coupled to the bottom surface of the pack case 2 by adhesive bonding or welding. In this case, since the battery cell 100 is directly stored in the pack case 2, it is also called a cell-to-pack type.

Meanwhile, although not illustrated in the drawings, the battery pack 1 according to the present disclosure may further include components of a battery pack known at the time of filing of the present disclosure, such as a BMS (Battery Management System) for integrated control of the charging and discharging of one or more cell assemblies 10, a current sensor, and a fuse.

As an example, referring to the embodiment illustrated in FIG. 5, a cooling member 200 may be configured to be connected to the pack case 2. For example, the cooling member 200 may be provided on the side surface of the pack case 2.

Specifically, the cooling member 200 may include a fastening portion 230. The fastening portion 230 may be configured to fix the cooling member 200 to the pack case 2. The fastening portion 230 may be configured to have elasticity. A plurality of fastening portions 230 may be provided. The fastening portion 230 may be connected to the first accommodation portion 210 and/or the second accommodation portion 220. The fastening portions 230 may be connected to different cooling members 200. In this case, the elastic coefficient or number of fastening portions 230 may be appropriately configured to secure the cell assembly 10.

According to the above-implemented configuration of the present disclosure, since the cooling member 200 and the pack case 2 are connected and secured to each other, the cooling member 200 may stably maintain the arrangement of the cell assembly 10. That is, even if an external impact is applied to the pack case 2, the cell assembly 10 may be prevented from falling over by the tensioned fastening portion 230.

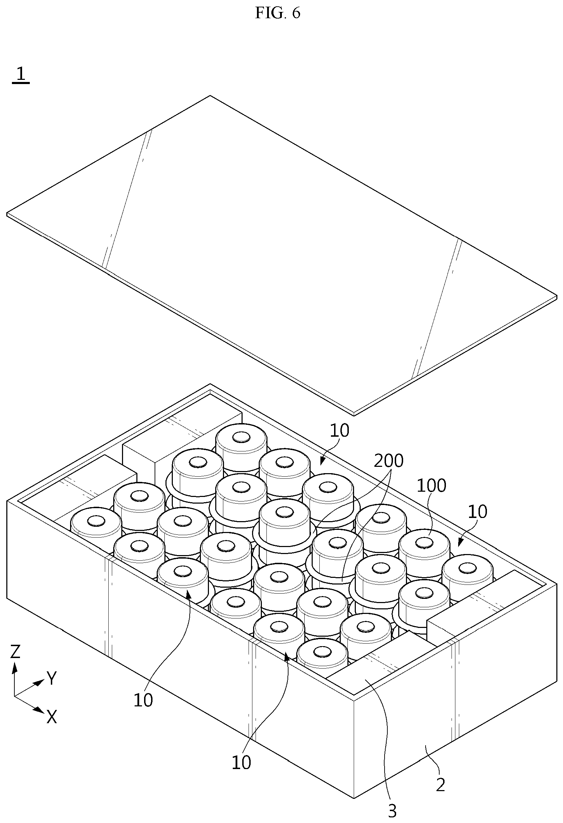

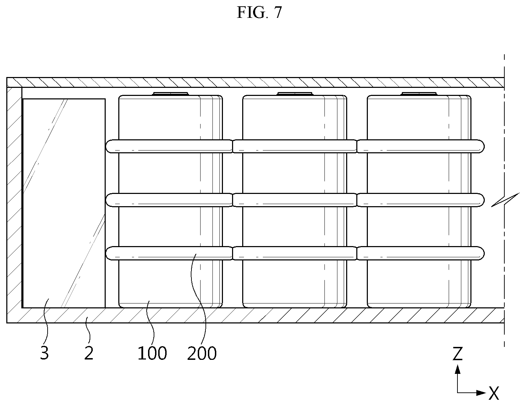

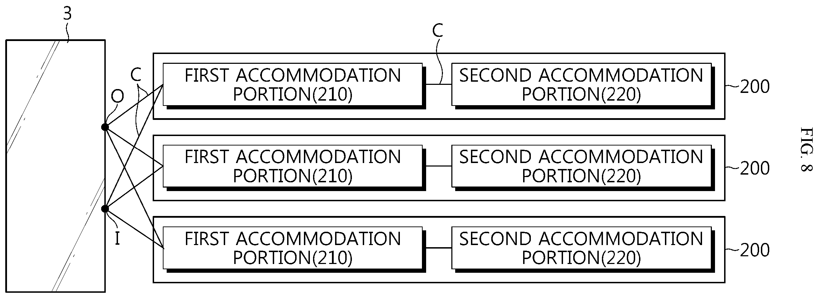

FIG. 6 is a schematic perspective view of a battery pack including a cell assembly according to another embodiment of the present disclosure. In addition, FIG. 7 is a cross-sectional view of a portion of a battery pack according to another embodiment of the present disclosure, and FIG. 8 is a drawing illustrating the flow of a cooling medium in a battery pack according to another embodiment of the present disclosure.

Referring to FIGS. 6 and 8, a battery pack 1 according to an embodiment of the present disclosure may further include a heat sink 3. The heat sink 3 may have a cooling medium C therein. More specifically, the heat sink 3 may be configured to cool the cooling medium C. The heat sink 3 may include a compressor or a mini-chiller therein.

The heat sink 3 may be provided outside the pack case 2. Alternatively, as disclosed in the embodiment shown in FIGS. 6 and 7, the heat sink 3 may be installed inside the pack case 2. When the heat sink 3 is provided inside the pack case 2, it may be positioned between the cell assembly 10 and the pack case 2.

The heat sink 3 may be configured to be fastened to the pack case 2 by a fastening member, such as a bolt. For example, the bolt may have a diameter of M8 or more. The bolt may be configured so that the pack case 2 and the heat sink 3 are not separated when vibration or impact is applied to the pack case 2. In this case, the heat sink 3 may be easily separated from the pack case 2, thereby improving assembly efficiency and facilitating repair or replacement of the heat sink 3.

The heat sink 3 may be configured to be in contact with at least one side of the cooling member 200. In particular, the heat sink 3 may be configured to be connected to the cooling member 200. Accordingly, the cooling medium C cooled by the heat sink 3 may flow to the cooling member 200.

More specifically, referring to FIG. 8, the heat sink 3 may have an outlet O and an inlet I. The outlet O and the inlet I may be configured to communicate the heat sink 3 and the cooling member 200 with each other. The cooling medium C may flow between the heat sink 3 and the cooling member 200 through the outlet O and the inlet I. The outlet O may be configured to supply the cooling medium C to the cooling member 200. The inlet I may be configured to receive the cooling medium C from the cooling member 200.

The outlet O and the inlet I may be configured to be connected to at least one of the first accommodation portion 210 and the second accommodation portion 220. As disclosed in the embodiments shown in FIGS. 4 and 8, in the case where a plurality of cooling members 200 are provided along the height direction, the outlet O and inlet I may be configured to be individually connected to the plurality of cooling members 200. Accordingly, the heat sink 3 may be configured to supply or receive the cooling medium C to or from each of the plurality of cooling members 200.

Meanwhile, unlike the above embodiment, a hole for inducing air cooling may be provided in the pack case 2, instead of the heat sink 3.

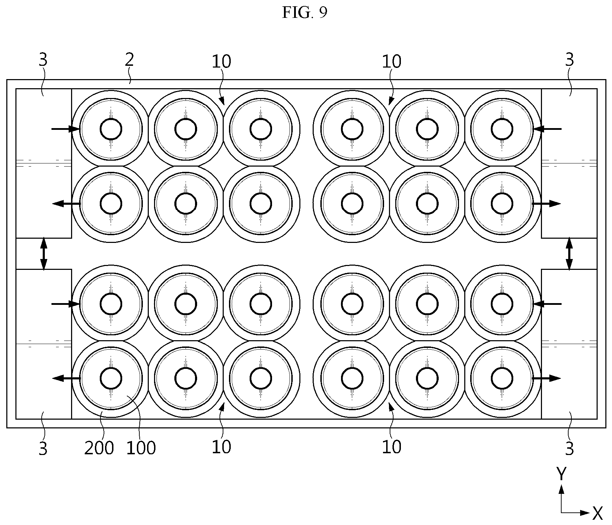

FIG. 9 is a top view of the interior of a battery pack according to another embodiment of the present disclosure.

A plurality of cell assemblies 10 may be provided. In addition, a plurality of cooling members 200 may also be provided. The cooling member 200 may be provided for each cell assembly 10. That is, the cooling member 200 may be configured to individually surround the plurality of cell assemblies 10.

In this case, a plurality of heat sinks 3 may also be provided. The plurality of heat sinks 3 may be configured to be individually connected to the plurality of cooling members 200.

In an embodiment, as illustrated in FIG. 9, the plurality of cooling members 200 may be configured to communicate with each other. Specifically, the plurality of heat sinks 3 may be configured to be interconnected so that the cooling medium C may flow therethrough. Therefore, the cooling medium C may also flow through the cooling members 200 connected to the plurality of heat sinks 3.

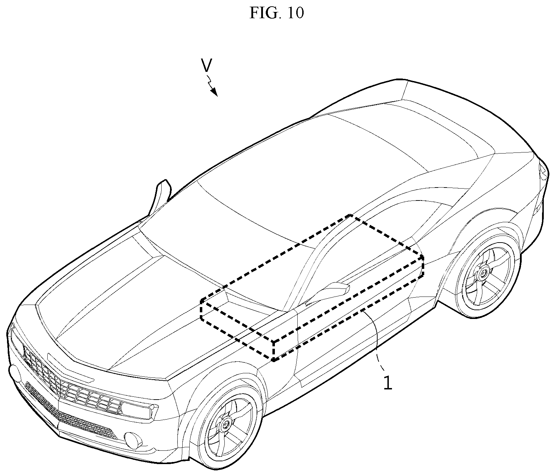

FIG. 10 is a schematic perspective view of a vehicle including a battery pack according to an embodiment of the present disclosure.

A vehicle V according to an embodiment of the present disclosure may include one or more battery packs 1 according to an embodiment of the present disclosure, or one or more cell assemblies 10 according to an embodiment of the present disclosure. The vehicle V according to the present disclosure may be, for example, an electric vehicle, a hybrid vehicle, or a plug-in hybrid vehicle. The vehicle V may include a four-wheel vehicle and a two-wheel vehicle. The vehicle V may operate by receiving power from the battery pack 1 or cell assembly 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A cell assembly comprising:
a plurality of battery cells; and
a cooling member configured to surround at least some of the plurality of battery cells and allow a cooling medium to flow therein.

2. The cell assembly of claim 1,
wherein the cooling member is configured in the form of a tube.

3. The cell assembly of claim 1,
wherein the cooling member is configured to maintain a uniform temperature among the plurality of battery cells.

4. The cell assembly of claim 1,
wherein the cooling member comprises
a first accommodation portion configured to surround a battery cell, and
a second accommodation portion configured to surround another battery cell.

5. The cell assembly of claim 4,
wherein the first accommodation portion and the second accommodation portion are connected to each other such that the cooling medium flows therethrough.

6. The cell assembly of claim 4,
wherein at least one of the first accommodation portion and the second accommodation portion is provided in a plurality of units for each of the battery cells.

7. A battery pack comprising at least one cell assembly according to any one of claims 1 to 6.

8. The battery pack of claim 7,
comprising a pack case configured to accommodate the cell assembly,
wherein the cooling member is configured to be connected to a side surface of the pack case.

9. The battery pack of claim 7,
further comprising a heat sink configured to be connected to the cooling member.

10. The battery pack of claim 9,
wherein the heat sink has
an outlet configured to supply the cooling medium to the cooling member, and
an inlet configured to receive the cooling medium from the cooling member.

11. The battery pack of claim 7,
wherein the cell assembly and the cooling member are provided in a plurality of units, and
wherein the cooling member is provided for each cell assembly.

12. The battery pack of claim 11,
wherein the plurality of cooling members are configured to communicate with each other.

13. A vehicle comprising a battery pack according to any one of claims 7 to 12.
